# EUROPEAN PATENT APPLICATION

(11) **EP 2 078 992 A1**
(43) Date of publication of application: **15.07.2009**
(21) Application number: 06822642.2
(22) Date of filing: 31.10.2006
(51) Int. Cl.: G03H 1/02

(54) **HOLOGRAM RECORDING/REPRODUCING OPTICAL ELEMENT AND HOLOGRAM RECORDING/REPRODUCING DEVICE**

(71) Applicant: Fujitsu Limited, Kawasaki-shi, Kanagawa 211-8588 (JP)
(72) Inventor: YAMAKAGE, Yuzuru, Kawasaki-shi Kanagawa 2118588 (JP); UNO, Kazushi, Kawasaki-shi Kanagawa 2118588 (JP); YOSHIKAWA, Hiroyasu, Kawasaki-shi Kanagawa 2118588 (JP)
(74) Representative: Seeger, Wolfgang
(86) International application number: PCT/JP2006/321713
(87) International publication number: WO 2008/053523

(57) **Abstract**

An optical element (7) for recording/reproducing a hologram condenses a recording beam into a hologram recording medium, while also allowing the passage of a reproduction beam from the hologram recording medium in the reverse direction with respect to the recording beam. The optical element (7) is configured to converge, upon incidence of a parallel beam flux as the recording beam, an on-axis beam (S1) and off-axis beams (S2) contained in the parallel beam flux onto different image points (S2'). A beam condensing spot (C) of the on-axis beam (S1) and the off-axis beams (S2) is formed, with a predetermined diameter (d) at a predetermined position on an optical axis on a way to the image points (S2'). At least one of the on-axis beam (S1) and the off-axis beams (S2) has a diameter, at the predetermined position on the optical axis, smaller than the predetermined diameter (d) of the beam condensing spot (C).

## Description

### TECHNICAL FIELD

The present invention relates to a hologram recording/reproducing optical element which serves as an objective lens for a hologram recording medium, and also relates to hologram recording/reproducing device which includes this optical element.

### BACKGROUND ART

A conventional hologram recording/reproducing device is disclosed in Patent Document 1. The hologram recording/reproducing device disclosed in this document utilizes so called collinear hologram method when the device records a hologram to or reproduce a hologram from a hologram recording medium. The hologram recording/reproducing device is configured to apply a reference beam and a recording beam (signal beam) to a hologram recording medium through the same objective lens in recording. The device is also configured to receive a reproduction beam through a condensing lens, which is disposed on the opposite side to the objective lens, in reproducing.

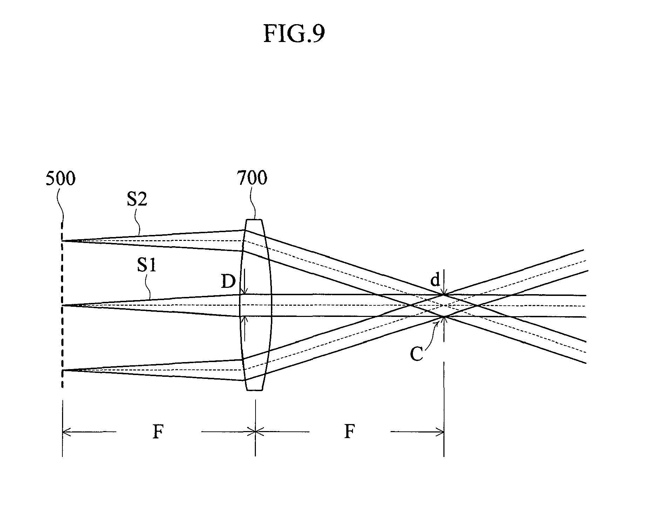

Generally, as depicted in Fig. 9, an objective lens 700 is configured to form a telecentric system. A telecentric system is an optical system in which either the entrance pupil or the exit pupil is located at infinity. Like the objective lens 700, an unillustrated condensing lens also forms a telecentric system. For example, when it is supposed that a spatial light modulator 500 is disposed at the position of the exit pupil, an on-axis beam S1 and an off-axis beam S2 have an incoming beam diameter D on the entrance surface of the objective lens 700, and the on-axis beam S1 and the off-axis beam S2 form a beam condensing spot C which has a diameter d on the hologram recording medium (not illustrated), the telecentric system gives a relationship represented by the following expression: Incoming beam diameter D = Diameter d of the beam condensing spot C. The diameter d of the beam condensing spot C (the incoming beam diameter D of the on-axis beam or of the off-axis beam) is given by an expression d=2F·NA, where NA represents an object-side numeric aperture of the objective lens 700, and F represents a focal length. The diameter d of the beam condensing spot C as described above corresponds to the size of a unit area for recording holograms, and the object-side numeric aperture NA is determined uniquely in accordance with the pixel size of the spatial light modulator 500. Thus, if recording density is to be increased by decreasing the diameter d of the beam condensing spot C, the focal length F must be made as small as possible.
Patent Document 1: Japanese Laid-open Patent Publication No. 2006-113296

However, with the objective lens 700 and the condensing lens provided in the above-described conventional hologram recording/reproducing device, it is impossible to decrease the diameter d of the beam condensing spot C as much because it becomes impossible to ensure the minimum necessary gap distance (working distance) between the lens and the hologram recording medium once the focal length F has been decreased to a certain level. Also, in order to decrease the focal length F and ensure a working distance at the same time, many lenses must be combined, which leads to complicated optical system.

### DISCLOSURE OF THE INVENTION

The present invention has been proposed under the above-described circumstances. It is an object of the present invention to provide a hologram recording/reproducing optical element which is capable of simplifying the optical system and facilitating increase of hologram recording density, and also to provide a hologram recording/reproducing device which includes such an optical element.

In order to solve the above-described problems, the present invention makes use of the following technical means:
According to a first aspect of the present invention, there is provided an optical element for recording/reproducing a hologram. The optical element condenses a recording beam into a hologram recording medium and allowing passage of a reproduction beam from the hologram recording medium in a reverse direction with respect to the recording beam. The optical element is configured to converge, upon incidence of a parallel beam flux as the recording beam, an on-axis beam and off-axis beams contained in the parallel beam flux onto different image points. The optical element is also configured to form a beam condensing spot of the on-axis beam and the off-axis beams with a predetermined diameter at a predetermined position on an optical axis on a way to the image points, and to cause at least one of the on-axis beam and the off-axis beams to have a diameter, at the predetermined position on the optical axis, that is smaller than the predetermined diameter of the beam condensing spot.

Preferably, the diameter of one of the off-axis beams may be smaller than the diameter of the on-axis beam at the predetermined position on the optical axis.

Preferably, the beam flux density of one of the off-axis beams may be higher than the beam flux density of the on-axis beam, at the predetermined position on the optical axis.

Preferably, the image plane formed collectively by the image points may be distorted curvedly or wavily.

According to the second aspect of the present invention, there is provided a hologram recording/reproducing device provided with an optical element for recording/reproducing a hologram, wherein the optical element is configured to condense a recording beam into a hologram recording medium and allowing the passage of a reproduction beam from the hologram recording medium in a reverse direction with respect to the recording beam. The optical element is one according to the first aspect of the present invention. In condensing a recording beam onto the hologram recording medium by the optical element, the hologram recording/reproducing device emits a recording reference beam to a beam condensing spot of the recording beam for interference. In receiving a reproduction beam from the hologram recording medium through the optical element, the hologram recording/reproducing device emits a reproduction reference beam as a phase conjugate beam with regard to the recording reference beam to the hologram recording medium.

### BRIEF DESCRIPTION OF THE DRAWINGS

Fig. 1 is an overall configuration chart depicting an embodiment of a hologram recording/reproducing device according to the present invention.
Fig. 2 is a ray diagram of an optical element incorporated in the hologram recording/reproducing device in Fig. 1.
Fig. 3 is a diagram depicting a simulation result of an optical element which is not in accordance with the present invention.
Fig. 4 is a diagram depicting a simulation result of an optical element according to the present invention.
Fig. 5 is an explanatory diagram for comparative description of an optical system according to the present invention and an optical system which is not in accordance with the present invention.
Fig. 6 is a ray diagram of another embodiment of an optical element according to the present invention.
Fig. 7 is a ray diagram of another embodiment of an optical element according to the present invention.
Fig. 8 is a ray diagram of another embodiment of an optical element according to the present invention.
Fig. 9 is a ray diagram of an optical element provided in a conventional hologram recording/reproducing device.

### BEST MODE FOR CARRYING OUT THE INVENTION

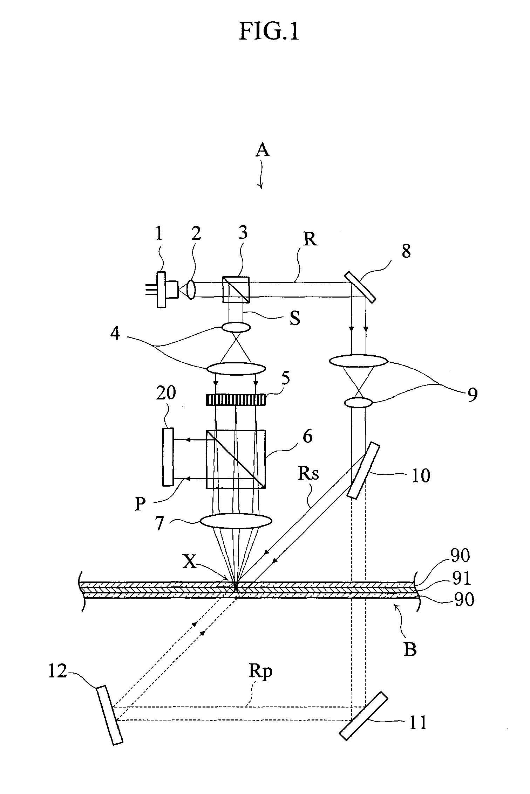

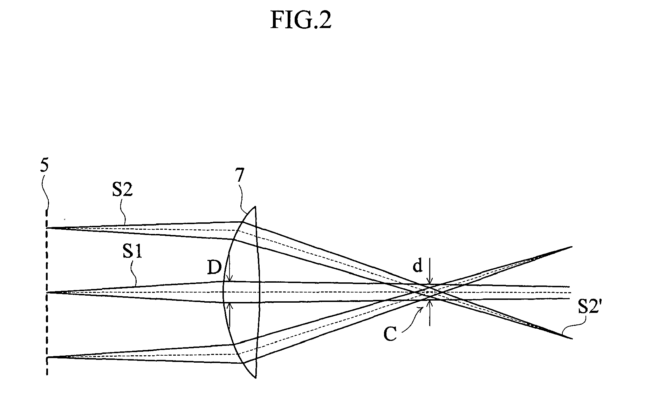

Hereinafter, preferred embodiments of the present invention are described with reference to the accompanying drawings. Fig. 1 and Fig. 2 depict a hologram recording/reproducing device and an optical element according to an embodiment of the present invention .

As depicted in Fig. 1, a hologram recording/reproducing device A illuminates a hologram recording medium B with a condensed recording beam Rs and a recording reference beam Rs, thereby recording a hologram in a unit recording area X. In reproducing, the hologram recording/reproducing device A illuminates the hologram recording medium B with a reproduction reference beam Rp as a phase conjugate beam with respect to the reference beam Rs, thereby generating a replay beam P at the unit recording area X, which is then received by the device A for reproducing the hologram.

The hologram recording/reproducing device A includes a light source 1, a collimator lens 2, a beam splitter 3, recording zoom lenses 4, a spatial light modulator 5, a half mirror 6, an optical element 7 as an objective lens to which the present invention is applied, a first reflector 8, reference zoom lenses 9, a recording galvanometer mirror 10, a second reflector 11, a reproduction galvanometer mirror 12, and a reproduction imaging element 20. The hologram recording/reproducing device A uses a hologram recording medium B, which has a recording layer 91 between two light-transmissive protective layers 90, so that the recording layer 91 can be illuminated from the both sides. A hologram is recorded in the recording layer 91 of the unit recording area X by interference of the recording beam S and the recording reference beam Rs. In reproduction, the unit recording area X is illuminated with the reproduction reference beam Rp from the side opposite to the side in recording, as indicated by the broken lines. The replay reference beam Rp is interfered with the hologram to generate the replay beam P, which travels to the optical element 7.

The light source 1 is provided by e.g. a semiconductor laser device, and emits a laser beam which has a relatively narrow band and a high coherence. The collimator lens 2 converts the laser beam from the light source 1 into a parallel beam. The parallel beam which comes out of the collimator lens 2 is split by the beam splitter 3 into a recording beam S and a reference beam R. After the zoom lenses 4 expands the beam diameter of the recording beam S, the recording beam S enters the spatial light modulator 5. In recording, the reference beam R travels to the hologram recording medium B via the first reflector 8, the reference zoom lens 9, and the recording-purpose galvanomirror 10 as the recording reference beam Rs. In reproduction, the reference beam R travels to the hologram recording medium B via via the first reflector 8, the reference zoom lenses 9, the second reflector 11, and the reproduction galvanometer mirror 12as the reproduction reference beam Rp. The recording reference beam Rs and the replay reference beam Rp are phase conjugate with each other. The incident angle of them with respect to the hologram recording medium B is varied by the galvanometer mirrors 10, 12 corresponding to respective one of them. Thus, multiplex recording of a plurality of holograms is performed in the unit recording area X in accordance with the incident angle of the recording reference beam Rs. On the other hand, in reproduction, a plurality of holograms are read out from the unit recording area X in accordance with the incident angle of the reproduction reference beam Rp.

The spatial light modulator 5 is provided by a transmissive liquid crystal display device, for example. By the spatial light modulator 5, the incoming recording beam S is modulated into a beam which has a pixel pattern in accordance with information to be recorded. After leaving the spatial light modulator 5, the recording beam S travels through the optical element 7 to reach the hologram recording medium B in a manner such that the recording beam S and the recording reference beam Rs interfere in the unit recording area X of the hologram recording medium B. In reproduction, the reproduction beam P is generated by interference of the hologram recorded in the unit recording area X and the reproduction reference beam Rp. Then, the reproduction beam P travels in the reverse direction to the traveling direction of the recording beam S through the optical element 7, and then is reflected by the half mirror 6. As a result, the reproduction beam P is received by the reproduction imaging element 20. In this way, the hologram recorded in the unit recording area X is read out.

The optical element 7 is provided by a biconvex lens as depicted in Fig. 2. The recording beam S emitted from the spatial light modulator 5 enters the optical element 7 in the form of a parallel beam flux. The distance between the spatial light modulator 5 and the optical element 7 corresponds to the front-side focal length of the optical element 7. The parallel beam flux of the recording beam S includes an on-axis beam S1, which has a main optical path fitting the optical axis of the optical element 7, and an off-axis beam S2, which travels off the optical axis at a predetermined distance. The on-axis beam S1 is converged onto an unillustrated image point by the optical element 7. On the other hand, the off-axis beam S2 is converged onto an illustrated image point S2' by the optical element 7. These image points collectively form an image plane which is nonflat and distorted as viewed in section. The optical element 7 forms a beam condensing spot C of the on-axis beam S1 and the off-axis beam flux S2 at a prescribed position on the optical axis on the way to the image point.

It is supposed that the diameter of the incoming on-axis beam flux S1 on the entrance surface of the optical element 7 is D, and that the diameter of the beam condensing spot C is d. The optical element 7 is configured in a manner such that the diameter d of the beam condensing spot C is smaller than the diameter D of the incoming beam, and that the diameter d of the beam condensing spot C is generally equal to the diameter of the on-axis beam flux S1. In other words, the optical element 7 converges the off-axis beam flux S2 more strongly than it converges the on-axis beam flux S1, thereby establishing a large distortion of the image plane and a telecentric system on the object-side. It should be noted here that a distance between the optical element 7 and the beam condensing spot C corresponds to a rear-side focal length, and the hologram recording medium B is disposed at the position where the beam condensing spot C is formed.

Next, the characteristics of the optical element 7 is described.

As depicted in Fig. 2, by using the optical element 7 according to the present embodiment, it is possible to decrease the diameter d of the beam condensing spot C considerably while keeping the rear-side focal length approximately same length as that in the conventional configuration. The diameter d of the beam condensing spot C determines the size of the unit recording area X. Thus, it is possible to record multiple holograms at the unit recording area X produced by the considerably small beam condensing spot C. For example, if the diameter d of the beam condensing spot C is half the diameter D of the incoming on-axis beam S1, the recording density becomes four times in theory compared with that in the case where D=d (i.e. the case in conventional art).

Further, by using the optical element 7, the off-axis beam S2 is converged more strongly than the on-axis beam S1 is converged. As a result, the off-axis beam S2 has a higher beam flux density than the on-axis beam S1 has at the position where the beam condensing spot C is formed. Thus, holograms are recorded by beams with a generally uniform intensity as a whole at the unit recording area X formed by the beam condensing spot C. In reproduction, a reproduction beam with sufficient intensity can be obtained from the range from a center region to outer circumferential regions of the unit recording area X.

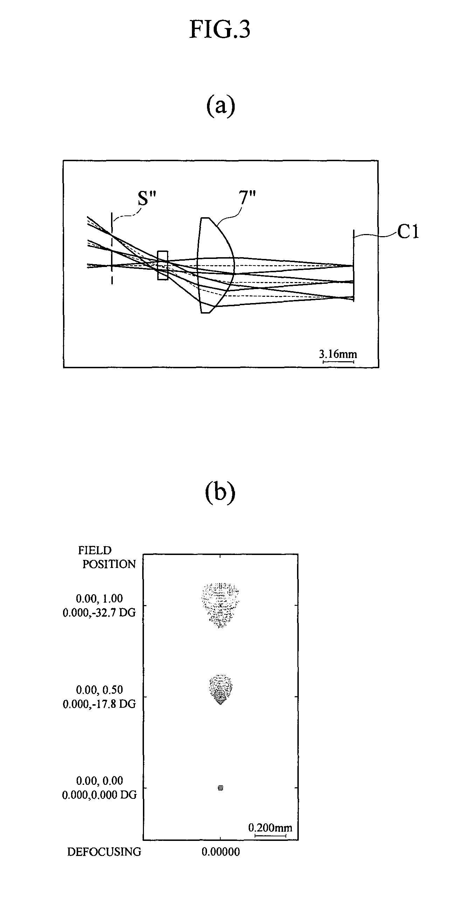

Fig. 3(a) is a beam path tracking chart of a simulation with regard to an optical element 7" which is not in accordance with the present invention. Fig. 3(b) is a spot diagram which depicts the result of the simulation. The optical element 7" depicted in the figure forms a flat image plane S", and beams are emitted from points on the image plane S" to reach the optical element 7" in this simulation for the optical element 7". When the optical element 7" as described is used, as understood from the spot diagram of Fig. 3(b), an object side (the image side in the simulation) shows a large aberration on a focal plane C1, resulting in an extremely inferior one-side telecentric characteristic. Accordingly, if the aberration is to be reduced, a large number of lenses have to be combined to constitute an optical element.

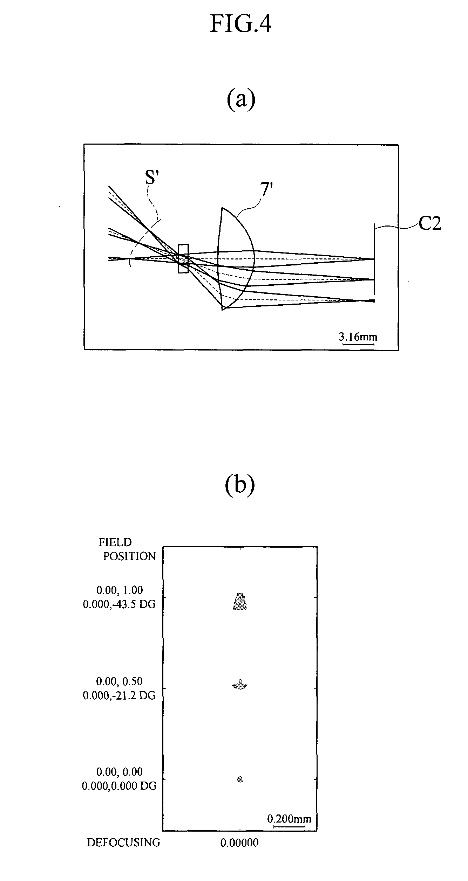

Fig. 4(a) is a beam path tracking chart of a simulation with regard to an optical element 7' according to the present invention. Fig. 4(b) is a spot diagram which depicts the result of the simulation. The optical element 7' depicted in the figure forms a distorted and nonflat image plane S', and beams are emitted from points on the image plane S' to reach the optical element 7' in this simulation for the optical element 7'. By using the optical element 7' according to the present invention, as understood from the spot diagram of Fig. 4(b), an object side (the image side in the simulation) shows a relatively small aberration on a focal plane C2, resulting in a good one-side telecentric characteristic. Accordingly, the optical element 7' according to the present invention, which forms a distorted and nonflat image plane, is capable of providing a superb optical characteristic of a one-side telecentric system even if the element is used as a single piece of lens.

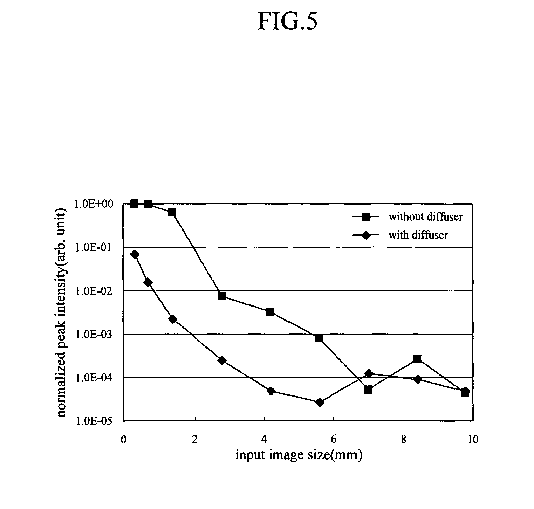

Fig. 5 is an explanatory diagram for comparative description of an optical system according to the present invention and an optical system which is not in accordance with the present invention. The optical system which not in accordance with the present invention includes an optical element which forms a distorted image plane, and a diffuser on the beam exit plane of the spatial light modulator. On the other hand, the optical system according to the present invention does not include a diffuser. The diffuser serves to uniformize distribution of the beam intensity on the focal plane (the recording surface on the hologram recording medium) of the optical element. The graph depicted in the figure has a horizontal axis representing the diameter of the object beam entering the optical element, and a vertical axis representing normalized peak intensity of the incident beam on the focal plane. Normalized peak intensity is a measure of beam intensity distribution. A large normalized peak intensity causes an intensity distribution having a steep peak near the focal point whereas a small normalized peak intensity causes a fluent intensity distribution. As understood from the graph in Fig. 5, if the diameter of the object beam is increased to a certain level, the optical system according to the present invention without a diffuser is capable of reducing the peak intensity of the incident beam near the focal point to a certain level. In other words, the optical element according to the present invention facilitates construction of a simple optical system without using an option such as a diffuser.

Therefore, by the optical element 7 according to the present embodiment enables the diameter d of the beam condensing spot C to be decreased independently of the focal length. As a result, the structure of the optical system is simplified without employing combined multiple lenses or a diffuser. Further, it becomes possible to ensure a minimum necessary gap distance (working distance) between the system and the hologram recording medium B and , at the same time, increasing hologram recording density easily.

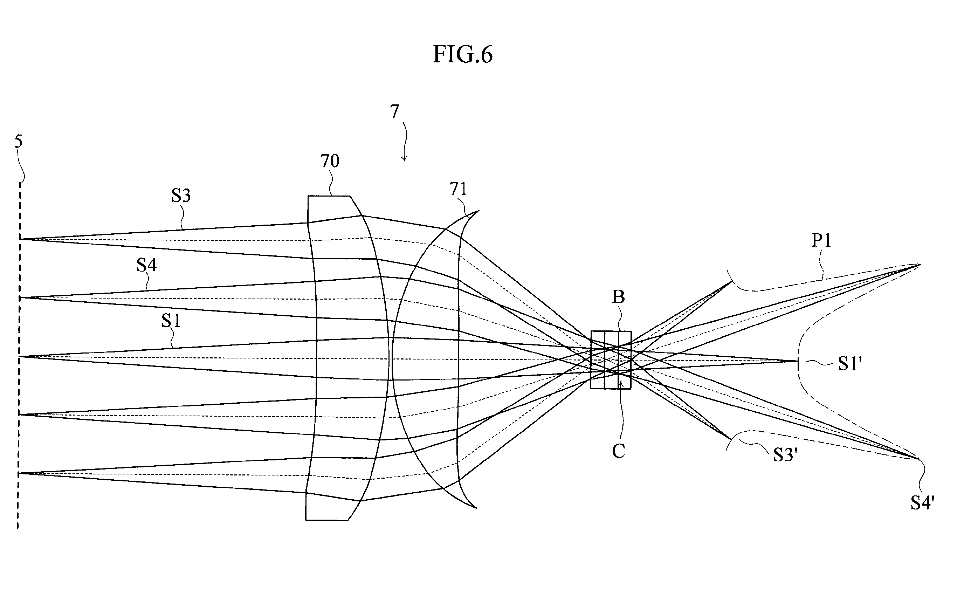

Figs. 6 through 8 depict other embodiments of the optical element according to the present invention.

Fig. 6 depicts an optical element 7 which includes two convex meniscus lenses 70, 71 combined with each other. An on-axis beam S1 and an off-axis beam S3 which travels at the farthest distance from the optical axis enter the optical element 7, and then are converged by the two convex meniscus lenses70, 71 onto different image points S1' and S3', respectively. On the other hand, an off-axis beam S4 which makes an entry at an intermediate position between those positions made by the on-axis beam S1 and by the off-axis beam S3 on the optical element 7 is converged by the two convex meniscus lenses70, 71 onto an image point S4' which is farther than the image points S1', S3'. These image points S1', S3', S4' collectively form an image plane P1 which has a wavily distorted section.

As depicted in Fig. 6, the on-axis beam S1 and the off-axis beams S3, S4 form a beam condensing spot C at a predetermined position (where a hologram recording medium B is disposed) on the optical axis on their way to the image points S1', S3', S4'. At this position where the beam condensing spot C is formed, respective diameters of the on-axis beam S1 and the off-axis beams S3, S4 are smaller than that of the beam condensing spot C. In other words, the optical element 7 is configured to converge strongly the off-axis beam S3, which travels at the farthest distance from the optical axis, and the on-axis beam S1.

By using the optical element 7 in Fig. 6 , it is possible to decrease the diameter d of the beam condensing spot C regardless of the focal length, and increase hologram recording density easily with a simple optical system.

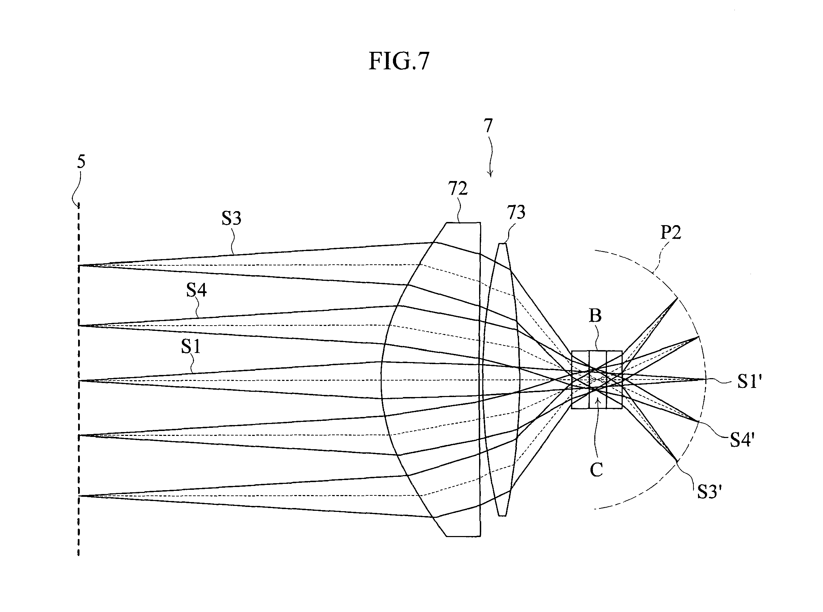

Fig. 7 depicts an optical element 7 which includes a convex meniscus lens 72 and a biconvex lens 73 combined with each other. An on-axis beam S1 and off-axis beams S3, S4 enter the optical element 7, and then are converged by the convex meniscus lens 72 and the biconvex lens 73 onto different image points S1', S3', and S4', respectively. These image points S1', S3', S4' collectively form an image plane P2 which has a curvedly distorted section.

As depicted in Fig. 7, the on-axis beam S1 and the off-axis beams S3, S4 form a beam condensing spot C at a predetermined position (where a hologram recording medium B is disposed) on the optical axis on the way to the image points S1', S3', and S4'. The beam condensing spot C has a diameter which is approximately equal to those of the off-axis beams S3, S4 whereas the on-axis beam S1 has a smaller diameter at this position where the beam condensing spot C is formed than that of the beam condensing spot C.

By using the optical element 7 in Fig. 7, it is possible to decrease the diameter d of the beam condensing spot C independently of the focal length, and to increase hologram recording density easily with a simple optical system.

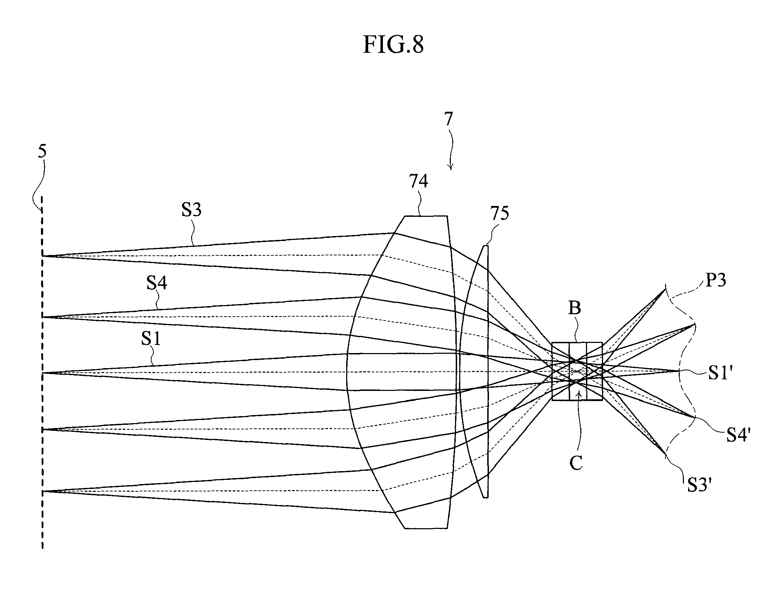

Fig. 8 depicts an optical element 7 which includes a biconvex lens 74 and a flat convex lens 75 combined with each other. An on-axis beam S1 and off-axis beams S3, S4 enter the optical element 7, and then are converged by the biconvex lens 74 and the flat convex lens 75 onto different image points S1', S3', and S4, respectively. These image points S1', S3', and S4' collectively form an image plane P3 which has a wavily distorted section.

As depicted in Fig. 8, the on-axis beam S1 and the off-axis beams S3, S4 form a beam condensing spot C at a predetermined position (where a hologram recording medium B is disposed) on the optical axis on the way to the image points S1', S3', and S4'. The beam condensing spot C has a diameter which is approximately equal to those of the off-axis beams S3, S4 whereas the on-axis beam S1 has a smaller diameter at this position where the beam condensing spot C is formed than that of the beam condensing spot C.

By using the optical element 7 in Fig. 8, it is possible to decrease the diameter d of the beam condensing spot C independently of the focal length and increase hologram recording density easily with a simple optical system.

It should be noted here that the present invention is not limited to the embodiments described above.

Arrangements described in these embodiments only represent examples, and designs may be varied appropriately in accordance with given specifications.

## Claims

1. An optical element for recording/reproducing a hologram, the optical element condensing a recording beam into a hologram recording medium and allowing passage of a reproduction beam from the hologram recording medium in a reverse direction with respect to the recording beam,
wherein the optical element is configured to: converge, upon incidence of a parallel beam flux as the recording beam, an on-axis beam and off-axis beams contained in the parallel beam flux onto different image points; form a beam condensing spot of the on-axis beam and the off-axis beams with a predetermined diameter at a predetermined position on an optical axis on a way to the image points; and causes at least one of the on-axis beam and the off-axis beams to have a diameter, at the predetermined position on the optical axis, smaller than the predetermined diameter of the beam condensing spot.

2. The optical element for recording/reproducing a hologram according to claim 1, wherein a diameter of one of the off-axis beams is smaller than a diameter of the on-axis beam at the predetermined position on the optical axis.

3. The optical element for recording/reproducing a hologram according to claim 1, wherein a beam flux density of one of the off-axis beams is higher than a beam flux density of the on-axis beam, at the predetermined position on the optical axis.

4. The optical element for recording/reproducing a hologram according to any one of claims 1 to 3, wherein an image plane formed collectively by the image points is distorted curvedly or wavily in section.

5. A hologram recording/reproducing device comprising an optical element for recording/reproducing a hologram, the optical element condensing a recording beam into a hologram recording medium and allowing passage of a reproduction beam from the hologram recording medium a reverse direction from a direction of the recording beam,
wherein the optical element is one according to any one of claims 1 through 4,
wherein, in condensing a recording beam onto the hologram recording medium by the optical element, a recording reference beam is emitted to a beam condensing spot of the recording beam for interference, and in receiving a reproduction beam from the hologram recording medium and through the optical element, a reproduction reference beam as a phase conjugate beam with regard to the recording reference beam is emitted to the hologram recording medium.
